# EUROPÄISCHE PATENTSCHRIFT

(11) **EP 1 780 069 B1**
(45) Veröffentlichungstag und Bekanntmachung des Hinweises auf die Patenterteilung: **30.03.2011**
(21) Anmeldenummer: 06022117.3
(22) Anmeldetag: 21.10.2006
(51) Int. Cl.: B60K 15/05

(54) **Tankklappenmodul mit integrierter Verriegelungsvorrichtung**
Fuel tank inlet cover assembly with integrated locking device
Module de trappe d' obturation de réservoir avec dispositif de verrouillage integré

(30) Priorität: 26.10.2005 DE 102005051140
(43) Veröffentlichungstag der Anmeldung: 02.05.2007
(73) Patentinhaber: GM Global Technology Operations, Inc., Detroit, MI 48265-3000 (US)
(72) Erfinder: Atzeni, Raffaele, 55299 Nackenheim (DE); Zentner, Christian, 65187 Wiesbaden (DE)
(74) Vertreter: Daniel, Ulrich W.P.

(56) Entgegenhaltungen:
- EP-A- 1 571 029
- DE-A1- 10 023 382
- DE-A1- 19 832 910
- DE-A1- 19 842 690
- FR-A1- 2 859 696
- US-A- 2 259 652

## Beschreibung

Die vorliegende Erfindung liegt auf dem Gebiet der Kraftfahrzeugtechnik und betrifft insbesondere ein Tankklappenmodul zum Einbau in ein Kraftfahrzeug mit einer integrierten Verriegelungsvorrichtung für die Tankklappe.

In Kraftfahrzeugen wird gewöhnlich ein Tankklappenmodul als vormontiertes Bauelement in eine Aufnahmeöffnung des seitlichen Karosserieblechs eingesetzt, um auf diese Weise eine topfförmige Tankmulde für den nach innen versetzten Kraftstoffeinfüllstutzen des Kraftstofftanks zu schaffen. Das Tankklappenmodul ist zu diesem Zweck mit einem topfförmigen Muldenkörper versehen, der eine Durchtrittsöffnung für den Kraftstoffeinfüllstutzen des Kraftstofftanks aufweist, welche dem Kraftstoffeinfüllstutzen in eingebautem Zustand dichtend anliegt. Zum Verschließen der Karosserieaufnahmeöffnung bzw. des Muldenkörpers nach außen ist eine dem umlaufenden Rand der Tankmulde anlegbare Tankklappe vorgesehen, die als Teil der Fahrzeugaußenhaut eine entsprechende Passform aufweist. Die Tankklappe ist gewöhnlich mittels eines Schwenkarms schwenkbar an dem Muldenkörper angebracht.

Um ein unerwünschtes Öffnen des Kraftstofftanks zu verhindern, sind moderne Kraftfahrzeuge mit einem Verriegelungssystem für die Tankklappe ausgestattet.

Ein solches Verriegelungssystem kann in einer einfachen Ausführung einen in eine an der Tankklappe angebrachte Rastöse greifenden, elastisch vorgespannten Rastbolzen umfassen. Um ein Öffnen der Tankklappe herbeizuführen, kann, beispielsweise durch einen durch einen Hebel betätigbaren Bowdenzug, der Rastbolzen entgegen seiner Vorspannkraft aus der Rastöse gezogen werden, wodurch die ebenfalls elastisch vorgespannte Tankklappe in ihre Öffnungsstellung springt. Zum Schließen der Tankklappe wird diese entgegen ihrer Vorspannkraft wieder in ihre Schließstellung gedrückt, so dass der Rastbolzen in die Rastöse greifen kann.

Nachteilig bei einem solchen rein mechanischen System ist insbesondere die Tatsache, dass zum Öffnen der Tankklappe in wenig komfortabler Weise ein mechanischer Hebel zu betätigen ist. Weiterhin erfordert ein solches Verriegelungssystem, dass der Bediener bei einem gewünschten Auftanken des Kraftfahrzeugs bereits vor dem Aussteigen aus dem Fahrzeug daran denken muss, den Hebel zum Öffnen der Tankklappe zu betätigen.

In ausgefeilteren Verriegelungssystemen ist ein elektrisch betätigter Verriegelungsmechanismus vorgesehen, bei dem ein Stellmotor einen wie oben beschriebenen, in eine an der Tankklappe angebrachte Rastöse greifenden Rastbolzen bewegt oder alternativ die Tankklappe in eine Öffnungs- bzw. Schließstellung verschwenken kann. Der Stellmotor kann hierbei entweder durch einen Schalter fernbetätigt werden, was wenig komfortabel ist, oder alternativ so mit der Zentralverriegelung des Kraftfahrzeugs gekoppelt sein, dass die Tankklappe bei nichtverriegeltem Fahrzeug geöffnet werden kann und andernfalls mit dem verriegelten Fahrzeug verriegelt ist.

Im Stand der Technik ist bekannt, den Stellmotor zur fernbetätigten Verriegelung der Tankklappe mit einem Rastbolzen getrennt von dem Tankklappenmodul anzuordnen.

So beschreibt die EP 0 736 406 A1 ein Tankklappenmodul, bei der ein Stellmotor getrennt von dem Tankklappenmodul an der Fahrzeugkarosserie befestigt ist. Der Stellmotor treibt hierbei einen Verriegelungsbolzen zur Verriegelung der Tankklappe an. Nachteilig bei dieser Ausgestaltung des Tankklappenmoduls ist insbesondere die Tatsache, dass zur Montage des Stellmotors und des Tankklappenmoduls separate Montageschritte durchzuführen sind, was zeitaufwändig ist und die Herstellungskosten verteuert. Zudem müssen zur Justierung des Verriegelungsbolzens enge Montagetoleranzen eingehalten werden. Darüber hinaus erfordert die separate Anordnung des Stellmotors vergleichsweise viel Bauraum.

Weiterhin ist es im Stand der Technik bekannt zum fernbetätigten Verschwenken der Tankklappe den Stellmotor als integralen Bestandteil des Tankklappenmoduls auszubilden, was den Vorteil hat, dass unabhängig vom Fahrzeugtyp stets der gleiche Stellmotor verwendet werden kann, Bauteile zur separaten Befestigung des Stellmotors entfallen können und zudem Bauraum eingespart werden kann. So ist aus der EP 1 362 733 A1 eine Tankklappeneinheit bekannt, welche ein integriertes Verschlusssystem mit einem Stellmotor als Teil der Tankklappeneinheit umfasst. Der Stellmotor greift hierbei in den Schwenkarm der verschwenkbar gelagerten Tankklappe ein, wodurch die Tankklappe in eine Öffnungs- bzw. Schließstellung verschwenkt werden kann. Nachteilig hierbei ist die Verriegelung der Tankklappe durch den selbstsperrenden Verschwenkmechanismus, welcher technisch vergleichsweise aufwändig und demzufolge kostenintensiv ist. Zudem ist die Verriegelungwirkung lediglich durch die Bewegungshemmung des selbstsperrenden Stellmotors gegeben.

Die deutsche Offenlegungsschrift DE 19832910 A1 zeigt eine Verschlussvorrichtung für Kraftfahrzeugtanks, die in eine von einem Karosserieteil geformte Tankmulde eingebaut werden kann.

Die französische Patentanmeldung FR 2859696 zeigt ein Tankklappenmodul gemäß dem Oberbegriff von Patentanspruch 1.

Demgegenüber besteht die Aufgabe der vorliegenden Erfindung darin, ein Tankklappenmodul für ein Kraftfahrzeug zur Verfügung zu stellen, durch welches die vorgenannten Nachteile herkömmlicher Tankklappenmodule vermieden werden können. So soll eine Verriegelungsvorrichtung für die Tankklappe so kompakt wie möglich in ein solches Tankklappenmodul integriert werden, um möglichst wenig Bauraum in Anspruch zu nehmen. Zudem soll die Montage des Tankklappenmoduls, sowie der Verriegelungsvorrichtung für die Tankklappe in einfacher und schneller Weise in lediglich einem einzigen Montageschritt ermöglicht sein und demzufolge vergleichsweise geringe Montagekosten verursachen. Schließlich soll die Verriegelung der Tankklappe sicher und für den Bediener komfortabel sein.

Diese Aufgabe wird nach dem Vorschlag der Erfindung durch ein Tankklappenmodul zum Einbau in ein Kraftfahrzeug mit den Merkmalen des unabhängigen Anspruchs gelöst. Vorteilhafte Ausgestaltungen der Erfindung sind durch die Merkmale der Unteransprüche angegeben.

Erfindungsgemäß ist ein Tankklappenmodul zum Einbau in ein Kraftfahrzeug, das einen durch einen Tankdeckel verschließbaren Kraftstoffeinfüllstutzen eines Kraftstofftanks aufweist, gezeigt. Das Tankklappenmodul umfasst hierbei in herkömmlicher Weise einen im Allgemeinen topfförmigen Muldenkörper mit einer Durchtrittsöffnung für den Kraftstoffeinfüllstützen, an dem mittels eines Schwenkmechanismus eine Tankklappe schwenkbar angebracht ist. Zur Verriegelung der Tankklappe ist eine Verriegelungsvorrichtung vorgesehen, die einen Teil des Tankklappenmoduls bildet, d. h. in das Tankklappenmodul integriert ist.

Das erfindungsgemäße Tankklappenmodul zeichnet sich nun in wesentlicher Weise dadurch aus, dass die Verriegelungsvorrichtung einen fernbetätigten Stellmotor, sowie einen mit dem Stellmotor zusammenwirkenden (bzw. von dem Stellmotor gesteuerten) und (unmittelbar) an der Tankklappe angreifenden Verriegelungsmechanismus umfasst. Mit anderen Worten, bei dem Verriegelungsmechanismus des erfindungsgemäßen Tankklappenmoduls wird im Unterschied zu der eingangs dargestellten Tankklappeneinheit mit integriertem Stellmotor die Tankklappe nicht durch ein selbstsperrendes Verschwenken der Tankklappe durch den Stellmotor verriegelt, sondern durch einen von dem Stellmotor angetriebenen Verriegelungsmechanismus, der zur Verriegelung der Tankklappe mit der Tankklappe selbst in Wirkverbindung steht. Auf diese Weise kann die Verriegelungsvorrichtung technisch einfach und äußerst kompakt unter Beanspruchung von vergleichsweise wenig Bauraum ausgebildet werden. Zudem kann eine sichere Verriegelung der Tankklappe erreicht werden.

Der Stellmotor der Verriegelungsvorrichtung des erfindungsgemäßen Tankklappenmoduls ist vorteilhaft ein vom Bordnetz des Kraftfahrzeugs gespeister Elektromotor, der im eingebauten Zustand des Tankklappenmoduls an das Bordnetz angeschlossen ist. Hierzu ist praktischer Weise ein Steckverbindungsmittel mit Stecker und zugehöriger Steckbuchse vorgesehen, bei dem beispielsweise der Stecker am Tankklappenmodul angebracht ist und in die Steckbuchse gelangt, sobald das Tankklappenmodul in die Aufnahmeöffnung des Karosserieblechs eingesetzt wird. Alternativ können Stecker und Steckbuchse manuell miteinander verbunden werden. Zur Fernbetätigung des Stellmotors kann eine elektrische Betätigungseinrichtung mit einem praktischer Weise vom Fahrersitz aus zu bedienenden Betätigungsschalter vorgesehen sein. Alternativ kann der Stellmotor mit der Zentralverriegelung des Kraftfahrzeugs so gekoppelt sein, dass eine Verriegelung der Tankklappe erfolgt, wenn das Kraftfahrzeug durch die Zentralverriegelung verriegelt wird und die Tankklappe entriegelt wird, wenn das Fahrzeug entriegelt wird. Alternativ ist es auch möglich, dass eine mechanische Betätigungseinrichtung, wie ein durch einen Hebel betätigbarer Bowdenzug, zur Fernbetätigung des Stellmotors des Tankklappenmoduls ausgebildet ist.

In dem erfindungsgemäßen Tankklappenmodul ist der Stellmotor an einer der Tankmulde abgewandten Rückseite (Außenseite) des topfförmigen Muldenkörpers angebracht, was besonders praktisch durch Verrasten mithilfe eines Rastmittels erfolgen kann. Um eine Explosions-/Brandgefahr aufgrund von nicht auszuschließender Funkenbildung zu vermeiden, ist der Stellmotor und gegebenenfalls andere elektrische Bauteile vorteilhaft in einem Stellmotorgehäuse gekapselt aufgenommen.

Falls das Tankklappenmodul, wie üblich, einen Schwenkmechanismus für die Tankklappe umfasst, bei dem die Tankklappe mithile eines schwenkbar gelagerten Schwenkarms verschwenkt werden kann, ist der Schwenkarm im Allgemeinen wenigstens teilweise in einer am Muldenkörper angebrachten Muldenkörpererweiterung aufgenommen. In diesem Fall ist der Stellmotor vorteilhaft in einer räumlichen Nähe (Umgebung) zur Muldenkörpererweiterung angeordnet, um das Tankklappenmodul möglichst kompakt auszubilden, so dass möglichst wenig Bauraum benötigt wird. Besonders vorteilhaft ist der Stellmotor hierbei in eingebautem Zustand des Tankklappenmoduls in vertikaler Richtung unterhalb der Muldenkörpererweiterung angeordnet.

Der Verriegelungsmechanismus des erfindungsgemäßen Tankklappenmoduls kann in einer Ausgestaltung ein mit dem Stellmotor zusammenwirkendes Verriegelungselement, wie beispielsweise ein Rastbolzen, sowie ein mit dem Verriegelungselement zusammenwirkendes, an der Tankklappe angebrachtes Verriegelungsgegenelement, wie beispielsweise eine Rastöse, umfassen. Hierbei kann das Verriegelungselement zur Verriegelung der Tankklappe durch den Stellmotor in eine das Verriegelungsgegenelement hintergreifende Position gebracht werden, was beispielsweise dadurch erfolgen kann, dass der Rastbolzen durch einen linearen Stellmotor hin und her bewegt und hierbei in die Rastöse hinein bzw. aus der Rastöse heraus bewegt werden kann.

Die Erfindung erstreckt sich ferner auf ein Kraftfahrzeug, das mit einem wie oben beschriebenen Tankklappenmodul ausgestattet ist.

Die Erfindung wird nun anhand eines Ausführungsbeispiels näher erläutert, wobei Bezug auf die beigefügte Zeichnung genommen wird. Es zeigt:

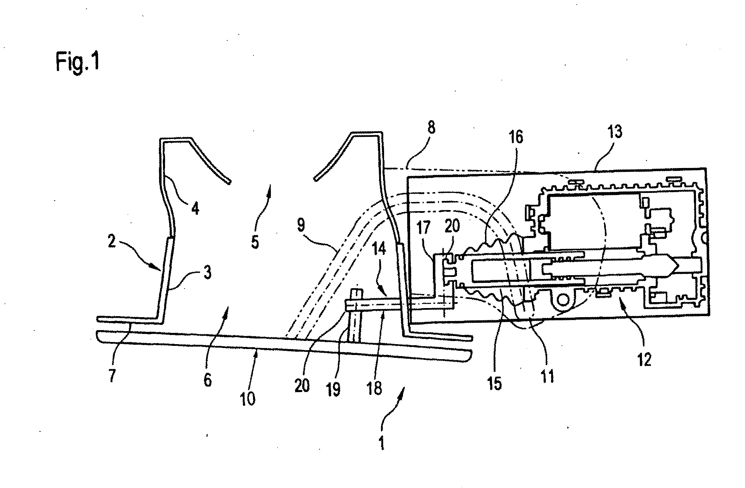

- Fig. 1: eine schematische Schnittdarstellung des Aufbaus eines Ausführungsbeispiels des erfindungs-gemäßen Tankklappenmoduls; genauer zeigt Fig. 1 einen Horizontalschnitt im eingebauten Zustand des Tankklappenmoduls.

Demnach ist in einem Tankklappenmodul zum Einbau in ein Kraftfahrzeug, welches insgesamt mit der Bezugszahl 1 bezeichnet ist, ein topfförmiger Muldenkörper ausgebildet, der insgesamt mit der Bezugszahl 2 bezeichnet ist. Der Muldenkörper 2 ist im Wesentlichen aus einem durch Spritzgießen herstellbaren, starren äußeren Topfteil 2 und einer am Topfteil 2 angeformten, meist elastisch veformbaren Bodenschürze 3 aufgebaut, wobei die letztere mit einer Durchtrittsöffnung 5 für einen in Fig. 1 nicht dargestellten, mit einem Tankdeckel verschließbaren Kraftstoffeinfüllstützen eines Kraftstofftanks versehen ist. Die Durchtrittsöffnung 5 liegt dem Kraftstoffeinfüllstutzen nach Einbau dichtend an. Der äußere Topfteil 2 und die Bodenschürze 3 formen gemeinsam eine Tankmulde 6. Ein um die Tankmulde 6 des Topfteils 3 umlaufender Rand ist als Randflansch 7 ausgebildet, welcher beispielsweise gummiert sein kann. An der der Tankmulde 6 abgewandten Rückseite des Muldenkörpers 2 ist eine Muldenkörpererweiterung 8 angebracht, in welcher ein Schwenkarm 9 eines Schwenkmechanismus zum Verschwenken einer Tankklappe 10 teilweise aufgenommen ist. Der Schwenkarm 9, welcher an einem Ende die Tankklappe 10 trägt, ist mit seinem anderen Ende in einem an der Muldenkörpererweiterung 8 befestigten Schwenklager 11 schwenkbar gelagert. Die Tankklappe 10 ist hierbei mittels eines nicht näher dargestellten Verrastmechanismus, wie ein Clips oder dergleichen an dem Schwenkarm 9 verrastet. Durch Verschwenken der Tankklappe 10 mittels des Verschwenkmechanismus kann die Tankklappe 10 in eine Schließstellung gebracht werden, in der sie dem Randflansch 7 anliegt. Eine Gummierung des Randflansches 7 kann hierbei für eine Verminderung des Schließgeräusches der Tankklappe 10 sorgen. Andererseits kann die Tankklappe 10 durch den Verschwenkmechanismus in eine Öffnungsstellung gebracht werden, in der der mit einem Tankdeckel verschließbare Kraftstoffeinfüllstutzen zugänglich ist und das Kraftfahrzeug betankt werden kann.

Weiterhin ist ein insgesamt mit der Bezugszahl 12 bezeichneter, linearer Stellmotor vorgesehen, welcher in einem Gehäuse 13 aufgenommen ist. Das Gehäuse 13 mit aufgenommenem Stellmotor 12 ist an der der Tankmulde 6 abgewandten Rückseite des Muldenkörpers 2 angebracht, was beispielsweise durch Verrasten mittels eines Clips oder dergleichen erfolgen kann. Im eingebauten Zustand des Tankklappenmoduls 1 ist der Stellmotor 12 in vertikaler Richtung unterhalb des Schwenkarms 9 bzw. der Muldenkörpererweiterung 8 positioniert, so dass eine wenig Bauraum benötigende, sehr kompakte Bauweise realisiert werden kann. Der lineare Stellmotor 12 wirkt mit einem Verriegelungsmechanismus für die Tankklappe 10 zusammen. Der Verriegelungsmechanismus umfasst hierbei einen Eckwinkel 14, der an einem Winkelschenkel 17 mit einer Aussparung 21 versehen ist, die einen translatorisch hin und her bewegbaren Stößel 15 des linearen Stellmotors 12 hintergreift, so dass der Eckwinkel 14 mit dem Stößel 15 hin und her bewegt werden kann. Der Stößel 15 ist hierbei von einem Faltenbalg 16 umgeben. An seinem anderen Winkelschenkel ist der Eckwinkel 14 zu einem Verriegelungsbolzen 18 verlängert und kann in eine Verriegelungsöse 20 greifen, die in einem an der Tankklappe 10 angebrachten Plattenglied 19 ausgebildet ist. Durch Hin- und Herbewegen des Eckwinkels 14 mittels des Stellmotors 12 kann somit der Verriegelungsbolzen 18 in die Verriegelungsöse 20 bzw. aus der Verriegelungsöse 20 bewegt werden, wodurch die Tankklappe 10 verriegelt bzw. entriegelt werden kann.

Für einen einfachen Einbau des vormontierten Tankklappenmoduls 1 in eine Aufnahmeöffnung des Karosserieblechs wird das Tankklappenmodul 1 vorteilhaft von außen in die Aufnahmeöffnung eingeschwenkt und mit einem in Fig. 1 nicht dargestellten Rastmechanismus, wie ein Clips oder dergleichen, am Karosserieblech verrastet. Weitere Schraub- bzw. Montagevorgänge fallen nicht an.

### Bezugszeichenliste

- 1: Tankklappenmodul
- 2: Muldenkörper
- 3: Topfteil
- 4: Bodenschürze
- 5: Durchtrittsöffnung
- 6: Tankmulde
- 7: Randflansch
- 8: Muldenkörpererweiterung
- 9: Schwenkarm
- 10: Tankklappe
- 11: Schwenklager
- 12: Stellmotor
- 13: Gehäuse
- 14: Eckwinkel
- 15: Stößel
- 16: Faltenbalg
- 17: Winkelschenkel
- 18: Verriegelungsbolzen
- 19: Plattenglied
- 20: Verriegelungsöse
- 21: Aussparung

## Patentansprüche

1. Tankklappenmodul (1) zum Einbau in ein Kraftfahrzeug, das einen durch einen Tankdeckel verschließbaren Kraftstoffeinfüllstutzen eines Kraftstofftanks aufweist, wobei das Tankklappenmodul einen Muldenkörper (2) mit einer Durchtrittsöffnung (5) für den Kraftstoffeinfüllstützen und eine mittels eines Schwenkmechanismus schwenkbar am Muldenkörper befestigte Tankklappe (10), sowie eine einen Teil des Tankklappenmoduls bildende Verriegelungsvorrichtung zur Verriegelung der Tankklappe umfasst,
wobei die Verriegelungsvorrichtung einen fernbetätigten Stellmotor (12) sowie einen mit dem Stellmotor zusammenwirkenden und an der Tankklappe angreifenden Verriegelungsmechanismus (14, 18, 19, 20) umfasst, wobei der Stellmotor an einer einer Tankmulde (6) abgewandten Außenseite des Muldenkörpers (2) angebracht ist, **dadurch gekennzeichnet, dass** der Schwenkmechanismus einen wenigstens teilweise in einer Muldenkörpererweiterung (8) des Muldenkörpers (2) aufgenommenen Schwenkarm (9) umfasst, wobei der Stellmotor (12) in eingebautem Zustand des Tankklappenmoduls in vertikaler Richtung unterhalb des Schwenkarms (9) angeordnet ist.

2. Tankklappenmodul nach Anspruch 1,
**dadurch gekennzeichnet, dass** der Verriegelungsmechanismus ein mit dem Stellmotor (12) zusammenwirkendes Verriegelungselement (18) sowie ein mit dem Verriegelungselement zusammenwirkendes, an der Tankklappe (10) angebrachtes Verriegelungsgegenelement (20) umfasst, wobei das Verriegelungselement zur Verriegelung der Tankklappe durch den Stellmotor in eine das Verriegelungsgegenelement hintergreifende Position gebracht werden kann.

3. Kraftfahrzeug mit einem Tankklappenmodul nach einem der Ansprüche 1 bis 2.

4. Kraftfahrzeug nach Anspruch 3,
**dadurch gekennzeichnet, dass** eine elektrische Betätigungseinrichtung zur Betätigung des fernbetätigten Stellmotors des Tankklappenmoduls ausgebildet ist.

5. Kraftfahrzeug nach Anspruch 4,
**dadurch gekennzeichnet, dass** eine mechanische Betätigungseinrichtung zur Betätigung des fernbetätigten Stellmotors des Tankklappenmoduls ausgebildet ist.

## Claims

1. A tank flap module (1) for installation in a motor vehicle, comprising a fuel filler neck of a fuel tank which can be locked by a fuel filler cap, with the tank flap module having a trough body (2) with a through-opening (5) for the fuel filler neck and a tank flap (10) which is pivotably fastened to the trough body by means of a pivoting mechanism, and a locking apparatus forming a part of the tank flap module for locking the tank flap, with the locking apparatus comprising a remotely actuated actuator (12) and a locking mechanism (14, 18, 19, 20) cooperating with the actuator and acting upon the tank flap, with the actuator being attached to an outside of the trough body (2) facing away from a filler-inlet compartment (6), **characterized in that** the pivoting mechanism comprises a swivel arm (9) accommodated at least partly in a trough body extension (8) of the trough body (2), with the actuator (12) being arranged in the vertical direction beneath the swivel arm (9) in the installed state of the tank flap module.

2. A tank flap according to claim 1, **characterized in that** the locking mechanism comprises a locking element (18) cooperating with the actuator (12) and a locking counter-element (20) which cooperates with the locking element and is attached to the tank flap (10), wherein the locking element can be brought by the actuator to a position engaging behind the locking counter-element for locking the tank flap.

3. A motor vehicle, comprising a tank flap module according to one of the claims 1 to 2.

4. A motor vehicle according to claim 3, **characterized in that** an electric actuating device is arranged for actuating the remotely actuated actuator of the tank flap module.

5. A motor vehicle according to claim 4, **characterized in that** a mechanical actuating device is arranged for actuating the remotely actuated actuator of the tank flap module.

## Revendications

1. Module de trappe de réservoir (1) destiné à être monté dans un véhicule à moteur présentant un tuyau de remplissage de carburant d'un réservoir de carburant pouvant être fermé par une trappe de réservoir, lequel module de trappe de réservoir présente un corps de cuvette (2) avec une ouverture traversante (5) pour le tuyau de remplissage de carburant et une trappe de réservoir (10) fixée sur le corps de cuvette de façon à pouvoir pivoter au moyen d'un mécanisme pivotant, ainsi qu'un dispositif de verrouillage faisant partie du module de trappe de réservoir pour le verrouillage de la trappe de réservoir, dans lequel le dispositif de verrouillage comprend un moteur de déplacement (12) actionné à distance ainsi qu'un mécanisme de verrouillage (14, 18, 19, 20) coopérant avec le moteur de déplacement et se mettant en prise sur la trappe de réservoir, le moteur de déplacement étant disposé sur une face extérieure du corps de cuvette (2) opposée à une cuvette de réservoir (6), **caractérisé en ce que** le mécanisme pivotant comprend un bras pivotant (9) au moins partiellement logé dans un élargissement (8) du corps de cuvette (2), le moteur de déplacement (12) étant disposé en dessous du bras pivotant (9) dans la direction verticale quand le module de trappe de réservoir est monté.

2. Module de trappe de réservoir selon la revendication 1, **caractérisé en ce que** le mécanisme de verrouillage comprend un élément de verrouillage (18) coopérant avec le moteur de déplacement (12) ainsi qu'un élément de verrouillage opposé (20) coopérant avec l'élément de verrouillage et disposé sur la trappe de réservoir (10), l'élément de verrouillage pouvant être amené par le moteur de déplacement pour verrouiller la trappe de réservoir dans une position passant derrière l'élément de verrouillage opposé.

3. Véhicule à moteur avec un module de trappe de réservoir selon l'une des revendications 1 à 2.

4. Véhicule à moteur selon la revendication 3, **caractérisé en ce qu'**un dispositif d'actionnement électrique est formé pour l'actionnement du moteur de déplacement du module de trappe de réservoir actionné à distance.

5. Véhicule à moteur selon la revendication 4, **caractérisé en ce qu'**un dispositif d'actionnement mécanique est formé pour l'actionnement du moteur de déplacement du module de trappe de réservoir actionné à distance.
